(19) Europäisches Patentamt / European Patent Office / Office européen des brevets

(11) **EP 4 527 878 A1**

(12) **EUROPEAN PATENT APPLICATION**

(43) Date of publication:
26.03.2025 Bulletin 2025/13

(21) Application number: 24164826.0

(22) Date of filing: 20.03.2024

(51) International Patent Classification (IPC):
*C08J 9/00* (2006.01)    *C08F 212/08* (2006.01)
*C08F 255/02* (2006.01)    *C08J 9/18* (2006.01)
*C08J 9/232* (2006.01)    *C08J 9/12* (2006.01)

(52) Cooperative Patent Classification (CPC):
(C-Sets available)
**C08J 9/232; C08F 255/02; C08J 9/0061;**
**C08J 9/18; C08L 25/06;** C08J 9/122; C08J 2203/06;
C08J 2325/06; C08J 2351/06; C08J 2423/06
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 07.02.2024 TW 113104963
21.09.2023 TW 112136022

(71) Applicant: **LCY Chemical Corp.**
**Kaohsiung City 812 (TW)**

(72) Inventors:
• **YI, Han-Liou**
**811 Kaohsiung City (TW)**
• **HSIEH, Cheng-Ting**
**811 Kaohsiung City (TW)**
• **LIN, Yu-Pin**
**811 Kaohsiung City (TW)**
• **CHUNG, Yao-Hsien**
**811 Kaohsiung City (TW)**
• **HSU, Keng-Wei**
**811 Kaohsiung City (TW)**

(74) Representative: **van Dam, Vincent**
**Octrooibureau Vriesendorp & Gaade B.V.**
**Koninginnegracht 19**
**2514 AB Den Haag (NL)**

(54) **EXPANDABLE RESIN PARTICLE, EXPANDED RESIN PARTICLE, FOAMED RESIN MOLDED ARTICLE AND MANUFACTURING METHOD THEREOF**

(57) A styrene-modified polyethylene-based expandable resin particle is provided, which comprise a polyethylene resin and a polystyrene resin, wherein a content of the polyethylene resin ranges from 5 wt% to 30 wt% and a content of the polystyrene resin ranges from 70 wt% to 95 wt% based on 100 wt% of the polyethylene resin and the polystyrene resin, wherein the polystyrene resin is in a form of grain dispersed in the polyethylene resin, an average grain size of the grain of the polystyrene resin ranges from 0.02 um to 0.15 um and from 0.20 um to 0.60 um respectively in a surface region and a center region of the expandable resin particle . In addition, an expanded resin particle and a foamed resin molded article prepared by the aforesaid expandable resin particle are also provided. Furthermore, a method for manufacturing the aforesaid expandable resin particle is also provided.

FIG. 2

EP 4 527 878 A1

(52) Cooperative Patent Classification (CPC): (Cont.)

C-Sets
**C08F 255/02, C08F 212/08;**
**C08L 25/06, C08L 23/06**

**Description**

CROSS-REFERENCE TO RELATED APPLICATIONS

This application claims the benefits of the Taiwan Patent Application Serial Number 113104963, filed on February 7, 2024, the subject matter of which is incorporated herein by reference.

BACKGROUND OF THE INVENTION

Field

The present disclosure relates to an expandable resin particle, an expanded resin particle, a foamed resin molded article and manufacturing methods thereof. More specifically, the present disclosure relates to a styrene-modified polyethylene-based expandable resin particle, a styrene-modified polyethylene-based expanded resin particle, a foamed resin molded article and manufacturing methods thereof.

Description of Related Art

The foamed resin molded article is widely used in packaging materials, building materials, and impact absorbing materials because of its good cushioning properties. In general, expandable resin particles are first prepared into expanded resin particles, and then these expanded resin particles are melted together within the mold to form the foamed resin molded article.
The materials of the expandable resin particles can include materials such as polyethylene, polypropylene or polystyrene. However, the foamed resin molded articles made of polystyrene have the disadvantage of poor restorability after compression. In addition, the foamed resin molded articles made of polyethylene or polypropylene have the disadvantage of insufficient rigidity.
Therefore, it is desirable to provide novel expandable resin particles, expanded resin particles, foamed resin molded articles and manufacturing methods thereof to solve the aforesaid disadvantages.

SUMMARY OF THE INVENTION

The present disclosure provides a styrene-modified polyethylene-based expandable resin particle, comprising: a polyethylene resin and a polystyrene resin, wherein a content of the polyethylene resin ranges from 5 wt% to 30 wt% and a content of the polystyrene resin ranges from 70 wt% to 95 wt% based on 100 wt% of the polyethylene resin and the polystyrene resin. Herein, the polystyrene resin is in a form of grains dispersed in the polyethylene resin; an average grain size of the grains of the polystyrene resin ranges from 0.02 um to 0.15 um in a surface region of the expandable resin particle, and the surface region of the expandable resin particle is a region from 1.5 um from a surface of the expandable resin particle to the surface of the expandable resin particle; and an average grain size of the grains of the polystyrene resin ranges from 0.20 um to 0.60 um in a center region of the expandable resin particle, and the center region of the expandable resin particle is a region at least 500 um away from the surface of the expandable resin particle.
The present disclosure also provides a styrene-modified polyethylene-based expanded resin particle, which is manufactured by the aforesaid expandable resin particle through a foaming process.
The present disclosure further provides a foamed resin molded article, which is manufactured by the aforesaid expanded resin particle through a molding process. Herein, the foamed resin molded article may be used as a material for a transport container or a transportation device.
In general, in the expanded resin particles containing polyethylene resin and polystyrene resin or in the foamed resin molded articles produced using the aforementioned expanded resin particles, when the content of the polystyrene resin is too high, the rigidity (compressive strength) will increase but the compression restorability (compression set) will deteriorate; and when the content of the polyethylene resin is too low, the expanded resin particles or the foamed resin molded articles will suffer from the problem of insufficient restorability. Thus, in the present disclosure, when the content of the polyethylene resin ranges from 5 wt% to 30 wt% and the content of the polystyrene resin ranges from 70 wt% to 95 wt% based on 100 wt% of the polyethylene resin and the polystyrene resin, the obtained expanded resin particles or foamed resin molded articles have appropriate rigidity and compression restorability.
For example, based on the sum of the content of the polyethylene resin and the content of the polystyrene resin being 100 wt%, the content of the polyethylene resin may be, for example, 8 wt%, 10 wt%, 12 wt%, 14 wt%, 16 wt%, 18 wt%, 20 wt%, 22 wt%, 24 wt%, 26 wt% or 28 wt%, and the balance is the polystyrene resin.
In one embodiment, based on 100 wt% of the polyethylene resin and the polystyrene resin, the content of the polyethylene resin ranges from 5 wt% to 25 wt% and the content of the polystyrene resin ranges from 75 wt% to 95 wt%. In one embodiment, based on 100 wt% of the polyethylene resin and the polystyrene resin, the content of the polyethylene resin ranges from 5 wt% to 20 wt% and the content of the polystyrene resin ranges from 80 wt% to 95 wt%. In one embodiment, based on 100 wt% of the polyethylene resin and the polystyrene resin, the content of the polyethylene resin ranges from 5 wt% to 15 wt% and the content of the polystyrene resin ranges from 85 wt% to 95 wt%.

In one embodiment, the polystyrene resin is in a form of grains dispersed in the polyethylene resin. The shapes of the grains of the polystyrene resin are not particularly limited, and the grains of the polystyrene resin may respectively be spherical, elliptical, spherical-like, elliptical-like or other irregular grains.

In one embodiment, in the surface region of the expandable resin particle, an average grain size of the grains of the polystyrene resin ranges from 0.02 um to 0.15 um and, for example, may range from 0.02 um to 0.14 $\mu$m or 0.02 um to 0.13 um. For example, in the surface region of the expandable resin particle, the average grain size of the grains of the polystyrene resin may be about 0.02 um, 0.03 um, 0.04 um, 0.05 um, 0.06 um, 0.07 um, 0.08 $\mu$m, 0.09 um, 0.10 um, 0.11 $\mu$m, 0.12 $\mu$m, 0.13 $\mu$m, 0.14 $\mu$m or 0.15 um. Herein, the average grain size of the grains of the polystyrene resin in the surface region of the expandable resin particle shows a positive correlation with the 50% compression set of the foamed resin molded article (for example, formed plates). When the average grain size of the grains of the polystyrene resin in the surface region of the expandable resin particle is too large, the 50% compression set of the foamed resin molded article (for example, formed plates) may increase, resulting in poor restorability of the foamed resin molded article (for example, formed plates).

In one embodiment, in the center region of the expandable resin particle, an average grain size of the grains of the polystyrene resin ranges from 0.20 um to 0.60 um and, for example, may range from 0.20 um to 0.50 um or 0.20 um to 0.45 um. For example, in the center region of the expandable resin particle, the average grain size of the grains of the polystyrene resin may be about 0.20 $\mu$m, 0.25 $\mu$m, 0.30 um, 0.35 um, 0.40 um, 0.45 $\mu$m, 0.50 um, 0.55 $\mu$m or 0.60 um. Herein, the average grain size of the grains of the polystyrene resin in the center region of the expandable resin particle shows a positive correlation with the flexural strength of the foamed resin molded article (for example, formed plates). When the average grain size of the grains of the polystyrene resin in the center region of the expandable resin particle is too small, the flexural strength of the foamed resin molded article (for example, formed plates) may not be ideal.

In one embodiment, in the surface region of the expandable resin particle, a quantity of the grains of the polystyrene resin with a grain size between 0.01 um to 0.1 um is 50% or more of a total quantity of the grains of the polystyrene resin and, for example, may be 55% or more, 60% or more, 65% or more, 70% or more, 75% or more, 80% or more, 85% or more or 90% or more of the total quantity of the grains of the polystyrene resin.

In one embodiment, in the surface region of the expandable resin particle, a quantity of the grains of the polystyrene resin with a grain size between 0.02 um to 0.08 $\mu$m is 50% or more of a total quantity of the grains of the polystyrene resin and, for example, may be 55% or more, 60% or more, 65% or more, 70% or more, 75% or more or 80% or more of the total quantity of the grains of the polystyrene resin.

In one embodiment, in the center region of the expandable resin particle, a quantity of the grains of the polystyrene resin with a grain size between 0.1 um to 0.6 um is 70% or more of a total quantity of the grains of the polystyrene resin and, for example, may be 75% or more, 80% or more, 85% or more, 90% or more or 95% or more of the total quantity of the grains of the polystyrene resin.

In one embodiment, in the center region of the expandable resin particle, a quantity of the grains of the polystyrene resin with a grain size between 0.2 um to 0.5 um is 60% or more of a total quantity of the grains of the polystyrene resin and, for example, may be 65% or more, 70% or more, 75% or more, 80% or more, 85% or more or 90% or more of the total quantity of the grains of the polystyrene resin.

In one embodiment, in the surface region of the expandable resin particle, a skewness of a curve of grain-size and quantity distribution of the grains of the polystyrene resin may be between -0.5 to 8, for example, -0.5 to 8, -0.4 to 8, - 0.4 to 7, -0.4 to 6, -0.4 to 5, -0.4 to 4, -0.4 to 3, -0.3 to 3, -0.2 to 3, -0.1 to 3, 0.0 to 3, 0.1 to 3, 0.2 to 3, 0.3 to 3 or 0.4 to 3. Herein, in the surface region of the expandable resin particle, the skewness of the curve of grain-size and quantity distribution of the grains of the polystyrene resin shows a negative correlation with the 50% compression set of the foamed resin molded article (for example, formed plates). If the skewness of the curve of grain-size and quantity distribution of the grains of the polystyrene resin in the surface region is outside the aforesaid range, the 50% compression set of the foamed resin molded article (for example, formed plates) may be increased. Thus, in one embodiment, when the skewness of the curve of grain-size and quantity distribution of the grains of the polystyrene resin in the surface region is within the aforesaid range, the foamed resin molded article (for example, formed plates) can have good restorability.

In one embodiment, in the surface region of the expandable resin particle, a kurtosis of a curve of grain-size and quantity distribution of the grains of the polystyrene resin may be between -1.5 to 120, for example, -1.5 to 100, -1.5 to 80, -1.5 to 60, -1.5 to 40, -1.5 to 20, -1.5 to 10, -1.0 to 10, -0.5 to 10, -0.3 to 10 or 0.0 to 10. Herein, in the surface region of the expandable resin particle, the kurtosis of the curve of grain-size and quantity distribution of the grains of the polystyrene resin shows a positive correlation with the tensile elongation of the foamed resin molded article (for example, formed plates). In one embodiment, when the kurtosis of the curve of grain-size and quantity distribution of the grains of the polystyrene resin in the surface region of the expandable resin particle is within the aforesaid range, the foamed resin molded article (for example, formed plates) has good tensile elongation.

In one embodiment, in the center region of the expandable resin particle, a skewness of a curve of grain-size and quantity distribution of the grains of the polystyrene resin may be between -0.7 to 0.7, for example, -0.6 to 0.7, -0.6 to 0.6, -0.5 to 0.6, -0.5 to 0.5, -0.4 to 0.5, -0.3 to 0.5, -0.2 to 0.5, -0.1 to 0.5 or 0.0 to 0.5. Herein, in the center region of the expandable resin particle, the skewness of the curve of grain-size and quantity distribution of the grains of the polystyrene resin shows a negative correlation with the compressive strength or the tensile strength of the foamed resin molded article (for example, formed plates). In one embodiment, when the skewness of the curve of grain-size and quantity distribution of the grains of the polystyrene resin in the center region of the expandable resin particle is within the aforesaid range, the compressive strength or the tensile strength of the foamed resin molded article (for example, formed plates) is good.

In one embodiment, in the center region of the expandable resin particle, a kurtosis of a curve of grain-size and quantity distribution of the grains of the polystyrene resin may be between -1.0 to 2.5, for example, -1.0 to 2.0, -0.5 to 2.0, -0.5 to 1.5 or -0.5 to 1.0. Herein, in the center region of the expandable resin particle, the kurtosis of the curve of grain-size and quantity distribution of the grains of the polystyrene resin shows a positive correlation with the flexural strength or the flexural modulus of the foamed resin molded article (for example, formed plates), but shows a negative correlation with the tensile elongation of the foamed resin molded article (for example, formed plates). In one embodiment, when the kurtosis of a curve of grain-size and quantity distribution of the grains of the polystyrene resin in the center region of the expandable resin particle is within the aforesaid range, the foamed resin molded article (for example, formed plates) has good flexural strength, flexural modulus or tensile elongation.

In one embodiment, an absorbance ratio at 698 $cm^{-1}$ and 2850 $cm^{-1}$ ($D_{698}/D_{2850}$) obtained from an infrared absorption spectrum of a surface of the expandable resin particle may be greater than or equal to 1.0, for example, may be greater than or equal to 1.2, 1.4, 1.6, 1.8, 2.0, 2.2, 2.4 or 2.5. In one embodiment, the absorbance ratio at 698 $cm^{-1}$ and 2850 $cm^{-1}$ obtained from the infrared absorption spectrum of the surface of the expandable resin particle may range from 1.0 to 6.0, for example, 1.2 to 6.0, 1.4 to 6.0, 1.6 to 6.0, 1.8 to 6.0, 2.0 to 6.0, 2.2 to 6.0, 2.4 to 6.0 or 2.5 to 6.0. Herein, the infrared absorption spectrum of the surface of the expandable resin particle may be the attenuated total reflectance (ATR)-infrared absorption spectrum.

When the surface of the expandable resin particles is detected through the infrared absorption spectrometer, $D_{698}/D_{2850}$ can reflect the proportion of the polystyrene in the region of the expandable resin particles several micrometers ($\mu$m) deep from the surface. $D_{698}/D_{2850}$ shows a negative correlation with the tensile elongation of the foamed resin molded articles (for example, formed plates). In one embodiment, if $D_{698}/D_{2850}$ is greater than the above range, the proportion of the polyethylene in the surface area is too low, which may cause the expanded resin particles to be unable to undergo the subsequent molding for forming the foamed resin molded article, or may lead to insufficient chemical resistance and elongation of the foamed resin molded article. In one embodiment, if $D_{698}/D_{2850}$ is less than the above range, the proportion of the polystyrene in the surface area is too low, which may result in insufficient rigidity (compressive strength).

In one embodiment, the average particle size of the expandable resin particle may range from 1.0 mm to 2.0 mm, for example, from 1.1 mm to 2.0 mm, 1.1 mm to 1.9 mm, 1.2 mm to 1.9 mm, 1.2 mm to 1.8 mm, 1.3 mm to 1.8 mm, 1.3 mm to 1.7 mm or 1.4 mm to 1.7 mm. When the average particle size of the expandable resin particles is too small, it is difficult to retain the foaming agent, which is not conducive to reducing the density of foamed resin molded articles. When the average particle size of the expandable resin particles is too large, the size of the expanded resin particles also increases, and the effect of filling the metal mold in the molding process is poor, and it is difficult to form a thin foamed resin molded article. However, the present disclosure is not limited thereto, and the average particle size of the expandable resin particles may be adjusted according to the needs.

In one embodiment, the polystyrene resin has an uncrosslinked part, and a molecular weight of the uncrosslinked part ranges from 30,000 to 80,000, for example, from 35,000 to 80,000, 40,000 to 80,000, 45,000 to 80,000, 50,000 to 80,000, 50,000 to 75,000, 55,000 to 75,000, 55,000 to 70,000 or 60,000 to 70,000. Herein, the molecular weight of the uncrosslinked part can be measured by gel permeation chromatography (GPC). In the present disclosure, the molecular weight of the uncrosslinked part of the polystyrene resin shows a negative correlation with the 50% compression set. If the molecular weight of the polystyrene resin is relatively large, when the expanded resin particle or foamed resin molded article is deformed by force, the displacement between the molecules can be small, so that the expanded resin particle or foamed resin molded article can have good restorability and is not easily deformed. Therefore, when the molecular weight of the uncrosslinked part of the polystyrene resin is within the aforementioned range, the resulting foamed resin molded article can have good restorability.

In one embodiment, the polymer dispersity index (PDI) of the uncrosslinked part of the polystyrene resin may be less than 4.0. Herein, the polymer dispersity index of the uncrosslinked part of polystyrene resin is negatively correlated with the elongation of the foamed resin molded article (for example, formed plate). The possible reason is that the uneven network size distribution of the polystyrene may result in poor bonding of the expanded resin particles, resulting in reduced elongation of the foamed resin molded articles. Therefore, when the polymer dispersity index of the uncrosslinked part of the polystyrene resin is within the aforementioned range, the foamed resin molded article can have good elongation.

In one embodiment, the expandable resin particle comprises a xylene insoluble matter and an acetone insoluble matter. The xylene insoluble matter is the part of polyethylene, polystyrene, or polyethylene together with polystyrene that forms a three-dimensional network structure due to chemical reactions and is insoluble in xylene. Herein, the expandable resin particles can be subjected to Soxhlet extraction with xylene to obtain a part insoluble in xylene, and this part is the xylene insoluble matter of the expandable resin particles. In addition, the acetone insoluble matter is the part of polystyrene, or polyethylene together with polystyrene that forms a loose two-dimensional network structure due to chemical reactions and is insoluble in acetone. Herein, the xylene soluble part of the expandable resin particles obtained by Soxhlet extraction with xylene can be extracted with acetone to obtain a part insoluble in acetone, and this part is the acetone insoluble matter of the expandable resin particle.

In one embodiment, the content of the xylene insoluble matter in the expandable resin particles may be less than or equal to 70 wt% (including 0 wt%), for example, may range from 1 wt% to 70 wt%, 5 wt% to 70 wt%, 10 wt% to 70 wt%, 15 wt% to 70 wt%, 20 wt% to 70 wt%, 20 wt% to 65 wt%, 25 wt% to 65 wt%, 25 wt% to 60 wt% or 30 wt% to 60 wt%. Herein, the xylene insoluble matter in the expandable resin particles has a positive correlation with the 50% compression set. When the content of the xylene insoluble matter in the expandable resin particles is within the aforementioned range, the resulting foamed resin molded article can maintain other required properties while still having good restorability and being not easily deformed.

In one embodiment, the content of the acetone insoluble matter in the expandable resin particles may range from 10 wt% to 60 wt%, for example, from 11 wt% to 60 wt%, 12 wt% to 60 wt%, 13 wt% to 60 wt%, 14 wt% to 60 wt%, 15 wt% to 60 wt%, 15 wt% to 55 wt%, 15 wt% to 50 wt%, 15 wt% to 45 wt% or 15 wt% to 40 wt%. Herein, the acetone insoluble matter in the expandable resin particles has a negative correlation with the compressive strength. The possible reason is that the two-dimensional network structure of the expandable resin particles is easier to form a layered stacking structure. In addition, the acetone insoluble matter in the expandable resin particles shows a negative correlation with the tensile strength of the obtained foamed resin molded article. The possible reason is that the two-dimensional network structure of the expandable resin particles is easier to form a layered stacking structure, and the other dimension has poor strength. Therefore, when the content of the acetone insoluble matter in the expandable resin particles is within the aforementioned range, the obtained foamed resin molded article can have good compressive strength (rigidity) and tensile strength.

In one embodiment, in the expandable resin particles, a ratio of a content of the xylene insoluble matter to a content of the acetone insoluble matter (the content of the xylene insoluble matter/the content of the acetone insoluble matter) may range from 0.01 to 5, for example, from 0.01 to 4.5, 0.01 to 4.0, 0.01 to 3.5, 0.05 to 3.5, 0.1 to 3.5, 0.1 to 3.0, 0.15 to 3.0, 0.15 to 2.5, 0.2 to 2.5, 0.2 to 2.0, 0.25 to 2.0, 0.25 to 1.5 or 0.3 to 1.5. Herein, the ratio of the content of the xylene insoluble matter to the content of the acetone insoluble matter is positively correlated with the 50% compression set. When the ratio of the content of the xylene insoluble matter to the content of the acetone insoluble matter in the expandable resin particles is within the aforementioned range, the obtained foamed resin molded article can still have good restorability and not easily deformed while retaining other required properties.

In one embodiment, in the expandable resin particles, a sum of the content of the acetone insoluble matter and the content of the xylene insoluble matter may range from 40 wt% to 90 wt%, for example, from 42 wt% to 90 wt%, 45 wt% to 90 wt%, 50 wt% to 90 wt%, 51 wt% to 90 wt%, 52 wt% to 90 wt%, 53 wt% to 90 wt%, 54 wt% to 90 wt%, 55 wt% to 90 wt%, 56 wt% to 90 wt%, 57 wt% to 90 wt%, 58 wt% to 90 wt%, 59 wt% to 90 wt% or 60 wt% to 90 wt%. Herein, the sum of the content of the acetone insoluble matter and the content of the xylene insoluble matter is positively correlated with the 50% compression set. When the sum of the content of the acetone insoluble matter and the content of the xylene insoluble matter in the expandable resin particles is within the aforementioned range, the obtained foamed resin molded article can have good restorability and be not easily deformed.

In one embodiment, the expandable resin particle may further include an acetone soluble matter, wherein the sum of the content of the acetone insoluble matter, the content of the xylene insoluble matter, and the content of the acetone soluble matter may be 100 wt%. In one embodiment, the content of the acetone soluble matter may range from 10 wt% to 60 wt%, for example, from 10 wt% to 58 wt%, 10 wt% to 55 wt%, 10 wt% to 50 wt%, 10 wt% to 49 wt%, 10 wt% to 48 wt%, 10 wt% to 47 wt%, 10 wt% to 46 wt%, 10 wt% to 45 wt%, 10 wt% to 44 wt%, 10 wt% to 43 wt%, 10 wt% to 42 wt%, 10 wt% to 41 wt% or 10 wt% to 40 wt%.

In one embodiment, a swelling ratio of the expandable resin particle may be less than or equal to 2.5, for example, may be less than or equal to 2.4, 2.3, 2.2, 2.1, 2.0, 1.9, 1.8, 1.7 or 1.6. When the swelling ratio of the expandable resin particle is within the aforementioned range, the expanded resin particles or foamed resin molded article obtained by the expandable resin particles can have excellent restorability (compression set) and excellent rigidity at the same time. The possible reason is that when the swelling ratio of the expandable resin particles is within the aforementioned range, the two-dimensional or three-dimensional structure of the resin is denser. Therefore, when deformed by force, the resin structure is less likely to collapse and can show good restorability (recovery).

In the present disclosure, the swelling ratio of the expandable resin particles is the swelling ratio of the mixed insoluble matter of the acetone insoluble matter and the xylene insoluble matter in the expandable resin particles in an organic solvent (for example, methyl ethyl ketone) at room temperature (for example, 23°C). The swelling ratio (swelling degree) of the crosslinked polyethylene resin immersed in the organic solvent is related to the crosslinked structure (three-dimensional network structure) of the resin. In addition, the denser the network structure, the lower the absorption of organic solvents, and also the less the swelling ratio. Furthermore, the non-crosslinked polyethylene resin hardly swells in the organic solvent.

In the present disclosure, compared with the expandable resin particles comprising mixed insoluble matters with a small swelling ratio, the expandable resin particles, where the mixed insoluble matters of the xylene insoluble matter (crosslinked polyethylene resin component) and the acetone insoluble matter (crosslinked polyethylene resin component, uncrosslinked polyethylene resin component and polyethylene resin component with graft-polymerized styrene monomer) has a large swelling ratio, comprise the polyethylene resin containing a crosslinked three-dimensional network structure with a large number of coarse meshes.

When the expandable resin particles are foamed, the polyethylene resin containing a crosslinked three-dimensional network structure with coarse meshes can be adequately extended and retain its strength, so a foamed cell wall with high strength can be formed. In addition, when the expanded resin particles are compressed, because the polyethylene resin is relatively flexible and can be fully deformed, even if the content of the polystyrene resin is high, the foamed cell walls of the expanded particles can maintain a closed bubble structure without being ruptured. Therefore, when the swelling ratio of the expandable resin particles is within the aforementioned range, the expanded resin particles and foamed resin molded articles with high rigidity and restorability can be obtained.

In addition, the present disclosure further provides a method for manufacturing a styrene-modified polyethylene-based expandable resin particle, comprising the following steps: providing a mixture comprising a polyethylene resin particle; and mixing the mixture comprising the polyethylene resin particle with a styrene monomer and a polymerization initiator to obtain the aforesaid styrene-modified polyethylene-based expandable resin particle.

In the present disclosure, in the step of mixing the mixture comprising the polyethylene resin particles with the styrene monomer and the polymerization initiator, the styrene monomer (and the polymerization initiator) can be added to the mixture comprising the polyethylene resin particles at one time or in multiple times. When the styrene monomer (and the polymerization initiator) is added to the mixture comprising the polyethylene resin particles in multiple times, the polystyrene aggregation can be reduced.

In the present disclosure, when the mixture comprising the polyethylene resin particles is mixed with the styrene monomer and the polymerization initiator, the reactants can be heated to an appropriate temperature (for example, 115°C to 125°C) to proceed the polymerization of the styrene monomer. When the polymerization reaction temperature of the styrene monomer is outside the range of 115°C to 125°C, it will affect the content of the xylene insoluble matter, which in turn affects the properties of the prepared foamed resin molded article. In addition, the polymerization reaction time of the styrene monomer is not particularly limited and can be adjusted according to the reaction conditions.

In the present disclosure, the polyethylene resin particles may include low density polyethylene (LDPE), high density polyethylene, or a combination thereof. The low density polyethylene includes linear low-density polyethylene or branch low-density polyethylene. In one embodiment, the polyethylene resin particles may include branch low-density polyethylene. In one embodiment, the "low density polyethylene" refers to polyethylene with a density ranging from 0.915 g/cm$^3$ to 0.935 g/cm$^3$.

In the present disclosure, the styrene monomer may include, for example, styrene, methylstyrene, ethylstyrene, dimethylstyrene, methoxystyrene, n-butylstyrene, tertbutylstyrene, chlorostyrene, tribromostyrene, divinylbenzene, styrene sulfonic acid, sodium styrene sulfonate or a combination thereof.

In the present disclosure, in addition to the polyethylene resin particles, the mixture comprising the polyethylene resin particles may further include a suspension agent, a surfactant, a polymerization inhibitor, a solvent or a combination thereof.

In the present disclosure, the suspension agent can be used as an abrasive or to avoid massive form of the resin generated. The suspension agent may be micro-particular inorganic suspension agent, for example, tricalcium phosphate, hydroxyapatite, magnesium pyrophosphate, magnesium phosphate, aluminum hydroxide, ferric hydroxide, titanium hydroxide, magnesium hydroxide, barium phosphate, calcium carbonate, magnesium carbonate, barium carbonate, calcium sulfate, barium sulfate, talc, kaolin or bentonite. The aforesaid suspension agents can be used alone, or two or more types can be used in combination. In one embodiment, the suspension agent can be sodium pyrophosphate ($Na_4P_2O_7$) and magnesium nitrate ($Mg(NO_3)_2$), and magnesium pyrophosphate ($Mg_2P_2O_{7(s)}$) can be obtained after reaction; but the present disclosure is not limited thereto.

In addition, the solid content of the amount of the suspension agent may be 0.05 to 10 parts by mass based on 100 parts by mass of the aqueous medium of the suspension polymer system, such as 0.3 to 5 parts by mass. For example, water can be used as the aqueous medium solvent. When the use amount of the suspension agent is too small, it is difficult to suspend and stabilize the styrene monomer, and massive form of resin may be generated. When the use amount of the suspension agent is too much, the manufacturing cost increases and the particle size distribution also becomes wider.

In the present disclosure, the surfactant can reduce surface tension (or interfacial tension). The surfactant may be, for example, an anionic surfactant, a nonionic surfactant, a cationic surfactant or a zwitterionic surfactant. Specific examples of the surfactant include, but are not limited to sodium alkyl sulfonate, sodium alkyl benzenesulfonate, sodium laurylsulfate, sodium $\alpha$-olefin sulfonate, sodium dodecyl benzene sulfonate (SDBS) or sodium dodecylphenyloxide disulfonate. The aforesaid surfactants can be used alone, or two or more types can be used in combination. In one embodiment, the surfactant may be SDBS, but the present disclosure is not limited thereto.

In the present disclosure, the polymerization inhibitor can reduce the polystyrene content on the surface of the expandable resin particles. The polymerization inhibitor may be an aqueous polymerization inhibitor, such as sodium nitrite, potassium nitrite, ammonium nitrite, L-ascorbic acid or citric acid. The aforesaid polymerization inhibitors can be used alone, or two or more types can be used in combination. In one embodiment, the polymerization inhibitor may be sodium nitrite; but the present disclosure is not limited thereto.

The aqueous polymerization inhibitor is hardly impregnated into the nuclear particles (polyethylene resin particles) and is dissolved in the aqueous medium. Therefore, the polymerization of micro-droplets of the styrene-based monomers, which are not impregnated into the nuclear particles and are near and absorbed to the surfaces of the nuclear particles, in an aqueous medium can be suppressed, while the polymerization of the styrene-based monomers impregnated into the nuclear particles is performed. Therefore, the amount of the polystyrene resin on the surface portion of the expandable resin particle can be reduced compared to the central portion.

The use amount of the aqueous polymerization inhibitor may be 0.001 to 0.1 parts by mass, for example, 0.002 to 0.02 parts by mass, relative to 100 parts by mass of the aqueous medium (for example, water as solvent). When the use amount of the aqueous polymerization inhibitor is too much, the residual styrene monomer will increase, and a good foamed resin molded article formed by the expanded resin particles cannot be obtained.

In the present disclosure, the polymerization initiator is used for the polymerization of the polystyrene. As the polymerization initiator, the polymerization initiator used in the suspension polymerization method of styrene monomer, such as peroxide, can be used. Specific examples of the peroxides as the polymerization initiators include, but are not limited to, cumene hydroperoxide, dicumyl peroxide, t-butylperoxy-2-ethylhexanoate (Perbutyl®E), t-butyl peroxybenzoate (TBPB), benzoyl peroxide, t-butylperoxyisopropyl carbonate, t-amylperoxy-2-ethylhexyl carbonate, hexyl peroxy-2-ethylhexyl carbonate, lauroyl peroxide and azo compounds (for example, azobisisobutyronitrile). The aforesaid polymerization initiator can be used alone, or two or more types can be used in combination. In one embodiment, the polymerization initiator can be t-butylperoxy-2-ethylhexanoate; in another embodiment, the polymerization initiator can be t-butyl peroxybenzoate; but the present disclosure is not limited thereto.

In addition, the amount of the polymerization initiator may be 0.01 to 3 parts by mass relative to 100 parts by mass of the styrene monomer. When the amount of the polymerization initiator is outside the aforementioned range, it will affect the content of the xylene insoluble matter, thereby affecting the properties of the prepared foamed resin molded article.

In the present disclosure, the solvent may be water.

In addition, the present disclosure further provides a method for manufacturing a styrene-modified polyethylene-based expanded resin particle, comprising the following steps: mixing the aforementioned styrene-modified polyethylene-based expandable resin particles with a foaming agent to perform a foaming process to obtain the styrene-modified polyethylene-based expanded resin particle. Specific examples of foaming agents include, but are not limited to, propane, butane, pentane, dimethyl ether or carbon dioxide. In one embodiment, the foaming agent can be carbon dioxide.

Furthermore, the present disclosure also provides a method for manufacturing a foamed resin molded article, comprising the following steps: providing a mold; filling the aforementioned styrene-modified polyethylene-based expanded resin particles into the mold to perform a molding process to obtain the foamed resin molded article. More specifically, the molding process includes: heating the styrene-modified polyethylene-based expanded resin particles to perform the secondary foaming, so that the expanded resin particles are melted and connected into one body, and the foamed resin molded article with a desired shape can be obtained.

It should be noted that, in the present specification, when a component is described to have an element, it means that the component may have one or more of the elements, and it does not mean that the component has only one of the element, except otherwise specified.

In the present specification, except otherwise specified, the feature A "or" the feature B means the existence of the feature A or the existence of the feature B. The feature A "and/or" the feature B means the existence of the feature A, the existence of the feature B, or the existence of both the features A and B. The feature A "and" the feature B means the existence of both the features A and B. The term "comprise(s)", "comprising", "include(s)", "including", "have", "has" and "having" means "comprise(s)/comprising but is/are/being not limited to".

In the present disclosure, except otherwise specified, the terms "almost", "about" and "approximately" usually mean the acceptable error in the specified value determined by a skilled person in the art, and the error depends on how the value is measured or determined. In some embodiments, the terms "almost", "about" and "approximately" mean within 1, 2, 3 or 4 standard deviations. In some embodiments, the terms "almost", "about" and "approximately" mean within $\pm 20\%$, within $\pm 15\%$, within $\pm 10\%$, within $\pm 9\%$, within $\pm 8\%$, within $\pm 7\%$, within $\pm 6\%$, within $\pm 5\%$, within $\pm 4\%$, within $\pm 3\%$, within $\pm 2\%$, within $\pm 1\%$, within 10.5%, within $\pm 0.05\%$ or less of a given value or range. The quantity given here is an approximate quantity, that is, without specifying "almost", "about" and "approximately", it can still imply "almost", "about" and "approximately". In addition, the terms "in a range of a first value to a second value", "from a first value to a second value" and the like mean the said range comprises the first value, the second value and other values between the first value and the second value.

Other novel features of the disclosure will become more apparent from the following detailed description.

BRIEF DESCRIPTION OF DRAWINGS

FIG. 1 is a schematic cross-sectional view of the morphology detection of a styrene-modified polyethylene-based expandable resin particle according to one example of the present disclosure.
FIG. 2 is a TEM photo of the surface region of the styrene-modified polyethylene-based expandable resin particle according to Example 1 of the present disclosure.
FIG. 3 is a TEM photo of the center region of the styrene-modified polyethylene-based expandable resin particle according to Example 1 of the present disclosure.

DETAILED DESCRIPTION OF THE EMBODIMENT

Different embodiments of the present disclosure are provided in the following description. These embodiments are meant to explain the technical content of the present disclosure, but not meant to limit the scope of the present disclosure. A feature described in an embodiment may be applied to other embodiments by suitable modification, substitution, combination, or separation.

The present disclosure will be described in more detail through embodiments, but these embodiments are not intended to limit the scope of the disclosure. Unless otherwise specified, in the following preparation examples, examples and comparative examples, the temperature is in degrees Celsius, and the parts and percentages are by weight. The relationship between parts by weight (or mass) and parts by volume is like the relationship between kilograms and liters.

Preparation of nuclear particles - polyethylene resin particles

By using an extruder (type ZE40A manufactured by Berstorff Corp.; 43 mmø and L/D=37.5 twin-screw extruder), the polyethylene resin (trade name: "NA248", density = 0.916 g/cm$^3$, manufactured by Asia Polymer Corporation) was melt-kneaded at a temperature of 230 to 250 °C, and cut to 0.4 to 0.6 mg/piece (average: 0.5 mg/piece) using the strand cut method to obtain nuclear particles (polyethylene resin particles).

Example 1 - Preparation of styrene-modified polyethylene-based expandable resin particles

In an autoclave ("Series 2246" manufactured by Amar Equipment Pvt. Ltd.) equipped with a stirring device and having an internal volume of 20 L, 8,000 g of RO water, 103.3 g of magnesium nitrate hexahydrate and 48.1 g of sodium pyrophosphate as a suspending agent, 11.5 g of sodium dodecyl benzene sulfonate as a surfactant, 1.2 g of sodium nitrite as an aqueous polymerization inhibitor, and then 600.0 g of the prepared polyethylene resin nuclear particles were added. Then, the mixture was stirred at 430 rpm for 30 minutes at room temperature.

Next, heating was initiated and the temperature was raised to 100 °C. After reaching the temperature of 100 °C, a first portion of the polymerization initiator (13.8 g of t-butylperoxy-2-ethylhexyl monocarbonate (trade name: "Perbutyl® E" manufactured by NOF Corp.) and a first portion of the styrene monomer (867.5 g) was added to the autoclave. Then, the temperature was raised, and maintained at 120°C for 3 hours (i.e. the constant reaction temperature and the time at the first stage shown in Table 2).

After the temperature was lowered to 100 °C, a second portion of the styrene monomer (2,549.4 g) was added to the autoclave. Then, the temperature was raised and maintained at 120°C for 6 hours (i.e. the constant reaction temperature and the time at the second stage shown in Table 2).

After the temperature was lowered, the product was taken out from the autoclave. Then, the product was dewatered and rinsed using a centrifuge, and water attached to the surface thereof was removed using a flash drying device to obtain the styrene-modified polyethylene-based expandable resin particles having an average particle size of approximately 1.37 mm.

Example 2 - Preparation of styrene-modified polyethylene-based expandable resin particles

The preparation method of the styrene-modified polyethylene-based expandable resin particles of the present example is similar to Example 1, except that a second portion of the polymerization initiator (13.8 g of t-butylperoxy-2-ethylhexyl monocarbonate) was added while adding the second portion of 2550 g of styrene monomer, and the obtained styrene-modified polyethylene-based expandable resin particles had an average particle size of approximately 1.36 mm.

The styrene-modified polyethylene-based expandable resin particles of Example 3 to Example 19 were prepared according to the following Table 1 and Table 2, wherein the preparation methods of the styrene-modified polyethylene-based expandable resin particles of Example 3 to Example 19 were similar to that of Example 1 or Example 2 and are not described again. Furthermore, in Example 10 to Example 19, in addition to changing the addition amounts according to Table 1 and Table 2, the internal volume of the autoclave was changed to 250 L instead of 20 L.

Table 1: Raw materials and amounts thereof used in Example 1 to Example 19 (unit: grams (g)) (Example is abbreviated as Ex, hereinafter.)

| Ex | Raw materials and amounts thereof | | | | | | | | | | | |
|---|---|---|---|---|---|---|---|---|---|---|---|---|
| | Water | SDBS | $Na_4P_2O_7$ | $Mg(NO_3)_2$ | Nuclear particles | $NaNO_2$ | First portion of the polymerization initiator | Type of the first portion of the polymerization initiator | First portion of the styrene monomer | Second portion of the polymerization initiator | Type of the second portion of the polymerization initiator | Second portion of the styrene monomer |
| 1 | 8000.0 | 11.5 | 48.1 | 103.3 | 600.0 | 1.2 | 13.8 | Perbutyl ®E | 867.5 | -- | -- | 2549.4 |
| 2 | 8000.0 | 10.0 | 48.0 | 103.0 | 600.0 | 1.2 | 13.8 | Perbutyl ®E | 869.5 | 13.8 | Perbutyl ®E | 2550 |
| 3 | 6800.0 | 17.3 | 81.7 | 175.5 | 1020.0 | 2.0 | 17.8 | Perbutyl ®E | 1474.0 | 35.6 | Perbutyl ®E | 4329.8 |
| 4 | 6800.0 | 17.2 | 81.9 | 175.6 | 1020.0 | 2.0 | 18.8 | Perbutyl ®Z (TBPB) | 1474.2 | 36.0 | Perbutyl ®Z (TBPB) | 4330.3 |
| 5 | 6800.0 | 17.1 | 81.7 | 175.6 | 1020.0 | 2.0 | 17.9 | Perbutyl ®Z (TBPB) | 1487.3 | 36.0 | Perbutyl ®Z (TBPB) | 4328.2 |
| 6 | 6800.0 | 18.0 | 82.0 | 175.7 | 1020.0 | 2.0 | 17.9 | Perbutyl ®Z (TBPB) | 1473.9 | 35.6 | Perbutyl ®Z (TBPB) | 4331 |
| 7 | 6800.0 | 18.0 | 82.0 | 175.7 | 1020.0 | 2.0 | 17.9 | Perbutyl ®Z (TBPB) | 1473.9 | 35.6 | Perbutyl ®Z (TBPB) | 4331 |
| 8 | 6803 | 18.2 | 82.4 | 176 | 1700 | 2.1 | 15.7 | Perbutyl ®Z (TBPB) | 1274.9 | 31.3 | Perbutyl ®Z (TBPB) | 3843.5 |
| 9 | 6808 | 18.2 | 82.2 | 176 | 1360.2 | 2.2 | 15.8 | Perbutyl ®Z (TBPB) | 1360.1 | 31.4 | Perbutyl ®Z (TBPB) | 4080.1 |
| 10 | 111665.0 | 139.6 | 670.0 | 1440.5 | 8374.9 | 16.7 | 146.6 | Perbutyl ®Z (TBPB) | 12087.7 | 293.1 | Perbutyl ®Z (TBPB) | 35537.4 |
| 11 | 111665.0 | 139.6 | 670.0 | 1440.5 | 8374.9 | 16.7 | 146.6 | Perbutyl ®Z (TBPB) | 12087.7 | 293.1 | Perbutyl ®Z (TBPB) | 35537.4 |
| 12 | 111665.0 | 139.6 | 670.0 | 1440.5 | 8374.9 | 16.7 | 146.6 | Perbutyl ®Z (TBPB) | 12087.7 | 293.1 | Perbutyl ®Z (TBPB) | 35537.4 |
| 13 | 111665.0 | 139.6 | 670.0 | 1440.5 | 8374.9 | 16.7 | 146.6 | Perbutyl ®Z (TBPB) | 12087.7 | 293.1 | Perbutyl ®Z (TBPB) | 35537.4 |
| 14 | 89696.6 | 224.2 | 1076.4 | 2313.6 | 13454.5 | 26.4 | 234.8 | Perbutyl ®Z (TBPB) | 19435.1 | 469.6 | Perbutyl ®Z (TBPB) | 57110.4 |

(continued)

| Ex | Raw materials and amounts thereof | | | | | | | | | | | |
|---|---|---|---|---|---|---|---|---|---|---|---|---|
| | Water | SDBS | $Na_4P_2O_7$ | $Mg(NO_3)_2$ | Nuclear particles | $NaNO_2$ | First portion of the polyme rization initiator | Type of the first portion of the polymeri zation initiator | First portion of the styrene monom er | Second portion of the polyme rization initiator | Type of the second portion of the polymeri zation initiator | Second portion of the styrene monome r |
| 15 | 90000.0 | 224.0 | 1076.0 | 2314.0 | 13500.0 | 26.0 | 244.0 | Perbutyl ®Z (TBPB) | 19400.0 | 470.0 | Perbutyl ®Z (TBPB) | 57200.0 |
| 16 | 90000.0 | 224.0 | 1076.0 | 2314.0 | 13500.0 | 26.0 | 244.0 | Perbutyl ®Z (TBPB) | 19400.0 | 470.0 | Perbutyl ®Z (TBPB) | 57200.0 |
| 17 | 90000.0 | 224.0 | 1076.0 | 2314.0 | 13500.0 | 26.0 | 244.0 | Perbutyl ®Z (TBPB) | 19400.0 | 470.0 | Perbutyl ®Z (TBPB) | 57200.0 |
| 18 | 90000.0 | 224.0 | 1076.0 | 2314.0 | 13500.0 | 26.0 | 244.0 | Perbutyl ®Z (TBPB) | 19400.0 | 470.0 | Perbutyl ®Z (TBPB) | 57200.0 |
| 19 | 90000.0 | 224.0 | 1076.0 | 2314.0 | 13500.0 | 26.0 | 244.0 | Perbutyl ®Z (TBPB) | 19400.0 | 470.0 | Perbutyl ®Z (TBPB) | 57200.0 |

Table 2: Reaction conditions and product characteristics of Example 1 to Example 19

| Ex | Nuclear particles | Solid content (%)* | Polystyrene content (%) | Feeding temperature (°C) | Constant reaction temperature(°C)/ time (hours) at the first stage | Constant reaction temperature(°C)/ time (hours) at the second stage | Stirring speed (rpm) | Average particle size of the expandable resin particle (mm) |
|---|---|---|---|---|---|---|---|---|
| 1 | NA248 | 33% | 85% | 100 | 120/3 | 120/6 | 430 | 1.37 |
| 2 | NA248 | 33% | 85% | 100 | 120/3 | 120/6 | 430 | 1.36 |
| 3 | NA248 | 49% | 85% | 100 | 120/2 | 120/2 | 260 | 1.33 |
| 4 | NA248 | 49% | 85% | 100 | 120/2 | 120/2 | 260 | 1.58 |
| 5 | NA248 | 49% | 85% | 100 | 115/2 | 115/2 | 260 | 1.45 |
| 6 | NA248 | 49% | 85% | 100 | 125/2 | 125/2 | 260 | 1.47 |
| 7 | NA248 | 49% | 85% | 100 | 120/2 | 120/2 | 260 | 1.21 |
| 8 | NA248 | 49% | 75% | 100 | 120/2 | 120/2 | 260 | 1.08 |
| 9 | NA248 | 49% | 80% | 100 | 120/2 | 120/2 | 260 | 1.47 |
| 10 | NA248 | 33% | 85% | 100 | 120/2 | 120/2 | 224 | 1.87 |
| 11 | NA248 | 33% | 85% | 100 | 120/2 | 120/2 | 224 | 1.48 |
| 12 | NA248 | 33% | 85% | 100 | 120/2 | 120/2 | 224 | 1.46 |
| 13 | NA248 | 33% | 85% | 100 | 120/2 | 120/2 | 224 | 1.93 |
| 14 | NA248 | 49% | 85% | 100 | 120/2 | 120/2 | 260 | 2.03 |
| 15 | NA248 | 49% | 85% | 100 | 120/2 | 120/2 | 223 | 1.42 |
| 16 | NA248 | 49% | 85% | 100 | 120/2 | 120/2 | 223 | 1.41 |
| 17 | NA248 | 49% | 85% | 100 | 120/2 | 120/2 | 223 | 1.63 |
| 18 | NA248 | 49% | 85% | 100 | 120/2 | 120/2 | 223 | 1.43 |
| 19 | NA248 | 49% | 85% | 100 | 120/2 | 120/2 | 223 | 1.45 |

*Solid content (SC) is calculated as follows:SC (%) = (amount of styrene monomer + amount of nuclear particles) / total amount of all ingredients $\times$ 100%

Preparation of styrene-modified polyethylene-based expanded resin particle

5,000 g of the styrene-modified polyethylene-based expandable resin particles prepared in Examples 1 to Example 19 was respectively charged in a 30L sealed container (pressure resistant container) equipped with a stirrer together with 2,000 g of RO water which was a dispersion medium. Further, 50 g of kaolin as a dispersant and 50 g of sodium alkylbenzene sulfonate as a surfactant were added into the dispersion medium. Next, while stirring the inside of the sealed container at a stirring speed of 300 rpm, the temperature was raised to an expanding temperature of 166° C. Then, carbon dioxide ($CO_2$) as an inorganic physical foaming agent was pressure-injected into the sealed container such that the pressure in the sealed container became 4.5-8.0 MPa (G: gage pressure), and the expandable resin particles were impregnated with carbon dioxide by maintaining the same temperature (166 °C) for 30 minutes to obtain expanded resin particles. Next, by discharging the expanded resin particles out from the sealed container together with the dispersion medium to atmospheric pressure, the styrene-modified polyethylene-based expanded resin particles having a density of about 45 kg/m³ were obtained.

Preparation of foamed resin molded article

First, the styrene-modified polyethylene-based expanded resin particles obtained as described above were aged for 1 day at room temperature. Next, by using a molding machine (JSM-HVA-P-400/300 manufactured by Jiuh-Shin Machinery Co., Ltd.), the expanded resin particles were molded into a molded article having a rectangular parallelepiped shape of 400 mm×300 mm×60 mm. The obtained molded article was dried for 1 day at a temperature of 60 °C, and then aged for 1 day or longer at room temperature.

Detection method of styrene-modified polyethylene-based expandable resin particles

Detection of xylene insoluble matter, acetone insoluble matter and swelling ratio

First, approximately 1 g of the expandable resin particles was collected, its weight (Wo) was weighed to the fourth decimal, and the weighed expandable resin particles were placed in a 150-mesh wire net bag. Next, approximately 200 ml of xylene was poured into a round shape flask having a volume of 200 ml, and a sample placed in the wire net bag was set in a Soxhlet extraction tube. The Soxhlet extraction was performed by applying heat to the flask with a mantle heater for 24 hours. After the extraction, the extraction tube was cooled by air cooling. After the cooling, the wire net was taken out from the extraction tube, and the sample and the wire net were rinsed using approximately 600 ml of acetone. Next, the acetone was volatilized, and the sample was dried at a temperature of 120° C. After the drying, the sample recovered from the wire net is the "xylene insoluble matter."

A xylene solution obtained after the Soxhlet extraction was added to 600 ml of acetone. Then, components that did not dissolve in acetone were filtered and recovered using a No. 5A filter paper specified by JIS P3801, and the recovered object underwent evaporation to dryness under reduced pressure. The obtained solid matter is an "acetone insoluble matter". In addition, the weight of "acetone soluble matter" can be obtained by subtracting the weights of "xylene insoluble matter" and "acetone insoluble matter" from the weight (Wo) of the expandable resin particles.

The weight (Wa) of the mixed insoluble matter of the "xylene insoluble matter" and the "acetone insoluble matter" obtained above was weighed to the fourth decimal point. It should be noted that, in some examples, when the weight of the mixed insoluble matter was less than 0.2 g, the above described operations were repeated until 0.2 g or more of the mixed insoluble matter was obtained in order to obtain a sufficient amount of the mixed insoluble matter.

Next, the mixed insoluble matter was immersed in 50 ml of methyl ethyl ketone, and was kept for 24 hours at a temperature of 23°C. Then, the mixed insoluble matter was taken out from methyl ethyl ketone, gently wiped using a filter paper, and the weight (Wb) of the mixed insoluble matter was weighed to the fourth decimal point. Then, the swelling ratio was obtained from the following equation based on the weights (Wb/Wa) of the mixed insoluble matter before and after being immersed in methyl ethyl ketone.

$$S = Wb/Wa \quad (1)$$

Herein, S is the swelling ratio, Wa is the weight of the mixed insoluble matter before immersing in methyl ethyl ketone, and Wb is the weight of the mixed insoluble matter after being immersed in methyl ethyl ketone.

Weight average molecular weight (Mw) of uncrosslinked part of polystyrene resin

Soxhlet extraction was performed similarly to the above described method. Then, the extracted xylene solution was added to 600 ml of acetone, and decantation and evaporation to dryness under reduced pressure were performed thereon. As a result, the polystyrene resin was obtained as an acetone soluble matter. The obtained acetone soluble matter of the polystyrene resin is subjected to the following detection, and the weight average molecular weight of the uncrosslinked part of the polystyrene resin can be obtained.

The weight average molecular weight (Mw) and the number average molecular weight (Mn) of the polystyrene resin were measured with gel permeation chromatography (GPC) (mix gel column for macromolecule assay) using polystyrene as a standard substance. Specifically, a measuring device (Waters APC) manufactured by Waters, was used, and measurement was performed with measurement conditions of eluent: tetrahydrofuran (THF), flow rate: 0.7 ml/min, sample concentration: 0.22 wt%, and column: Waters Acquity XT 900 (2.5 um)/450(2.5 um)/125(2.5 pm)/45(1.7 $\mu$m), 4.6×30mm×1+ 4.6×150 mm×3 connected in series. More specifically, the weight average molecular weight was obtained by dissolving the acetone soluble matter of the polystyrene resin in tetrahydrofuran, measuring thereof with gel permeation chromatography (GPC), and performing a correction using standard polystyrene. Thus, the weight average molecular weight (Mw) and the number average molecular weight (Mn) of the uncrosslinked part of the polystyrene resin can be obtained. In addition, the polymer dispersity index (PDI) of the uncrosslinked part of the polystyrene resin (i.e. Mw/Mn) can also be obtained.

Absorbance ratio at 698 cm$^{-1}$ and 2850 cm$^{-1}$ ($D_{698}/D_{2850}$)

The ATR method infrared spectroscopy is widely utilized in analyzing surfaces of various substances including organics such as polymer materials, wherein the spectrum can be measured simply by adhering a sample and an ATR prism, and a surface to a depth of a few micrometers can be analyzed.

Absorbance $D_{698}$ at 698 cm$^{-1}$ obtained from an infrared absorption spectrum refers to a height of a peak appearing around 698 cm$^{-1}$ which is derived from the out-of-plane deformation vibration of a benzene ring mainly contained in the polystyrene-based resin. In addition, absorbance $D_{2850}$ at 2850 cm$^{-1}$ obtained from an infrared absorption spectrum refers to a height of a peak appearing around 2850 cm$^{-1}$ derived from stretching vibration between C-H of a methylene group contained in both of the polyolefin-based resin and the polystyrene-based resin.

An absorbance ratio ($D_{698}$ / $D_{2850}$) was measured by the following manner. Surface analysis of 10 randomly selected expandable resin particles were conducted by ATR method infrared spectroscopy to obtain their infrared absorbing spectrum. From respective infrared absorption spectra, each absorbance ratio ($D_{698}$ / $D_{2850}$) was calculated, and a minimum absorbance ratio and a maximum absorbance ratio were excluded. Then, an arithmetic average of remaining 8 absorbance ratios was regarded as absorbance ratio ($D_{698}$ / $D_{2850}$). An absorbance ratio ($D_{698}$ / $D_{2850}$) was measured, for example, using a measuring apparatus available from Nicolet Instrument Corp. under trade name "Thermo Scientific Nicolet iS10".

Nuclear magnetic resonance ($^{13}$C NMR) - polystyrene content (wt%)

Approximately 0.3 g of the sample was weighed into a 10 mm NMR tube and approximately 0.7 g of xylene was added. Oxygen was reduced by a nitrogen purge via an inserted pipette for 1 min. The tube was capped and placed in an aluminum heating block of sample preparation unit, and heated at 105°C for two hours. The sample was periodically checked for homogeneity and mixed manually as necessary. The homogeneity of the mixture was clearly evident by the observation of the uniform distribution of the polymer in the solution, with no apparent areas of high solvent concentration or air pockets. The data were collected using a JEOL JNM-ECZ400S/L1 400 MHz with ROYALPROBE™ HFX. Following experimental conditions were used for $^{13}$C NMR, spectral width = 20000 Hz, relaxation delay = 10 s, number of scans = 4000, and inverse gated decoupling with a sample temperature of 105 °C. All measurements were made on non-spinning samples in locked mode. Samples were allowed to thermally equilibrate for 10 minutes prior to data acquisition. Polyethylene (PE) was determined by the peak at 29-31 ppm and polystyrene (PS) was determined by the peak at 145-148 ppm.

The PE/PS relative content was calculated by specified chemical shift ($\delta_C$) of $^{13}$C NMR spectrum. For PS, the $\delta_C$ at 145-148 ppm represents the quaternary carbon of benzene ring, and the $\delta_C$ at 29.0-31.2 ppm represents two secondary carbons (-CH$_2$-) of PE. For conversion of mole fraction to weight fraction, multiply each mole fraction by the respective molecular weight of ethylene (28) and styrene (140).

The formula and definition are as follows.

Definition

PS (mole): Integral of $\delta_C$ 145-148 ppm
PE (mole): Divide the integral of $\delta_C$ 29.0-31.2 ppm by 2
PS (wt): mole of PS multiply by molecular weight of styrene
PE (wt): mole of PE multiply by molecular weight of ethylene Equation

```
PS (wt%): [PS (wt)/ PS (wt)+ PE (wt)] × 100%

PE (wt%): [PE (wt)/ PS (wt)+ PE (wt)) × 100%
```

Morphology detection of styrene-modified polyethylene-based expandable resin particle

A styrene-modified polyethylene-based expandable resin particle was provided, and a cutting machine was used to cut the expandable resin particle in half from its surface through the central region to obtain a sample to be tested. The sample to be tested was embedded in epoxy resin, stained with ruthenium tetraoxide, and ultrathin sections were prepared using an ultramicrotome.

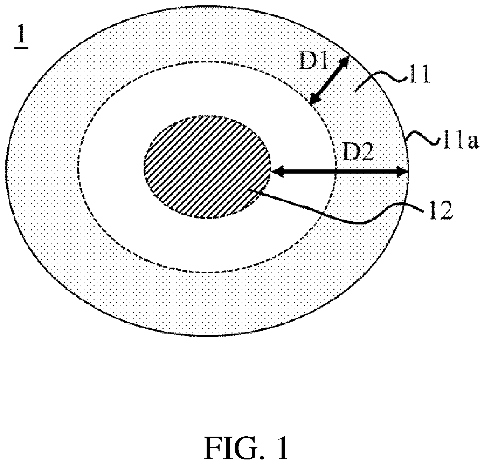

FIG. 1 is a schematic cross-sectional view of the morphology detection of the styrene-modified polyethylene-based expandable resin particle according to one example of the present disclosure. Herein, a region from 1.5 um from a surface 11a of the expandable resin particle 1 (i.e. the distance D1 is about 1.5 μm) to the surface 11a of the expandable resin particle 1 is the surface region 11 of the expandable resin particle 1, and a region at least 500 um away from the surface 11a of the expandable resin particle 1 (i.e. the distance D2 is about 500 μm) (to the center of the expandable resin particle) is the center region 12 of the expandable resin particle 1.

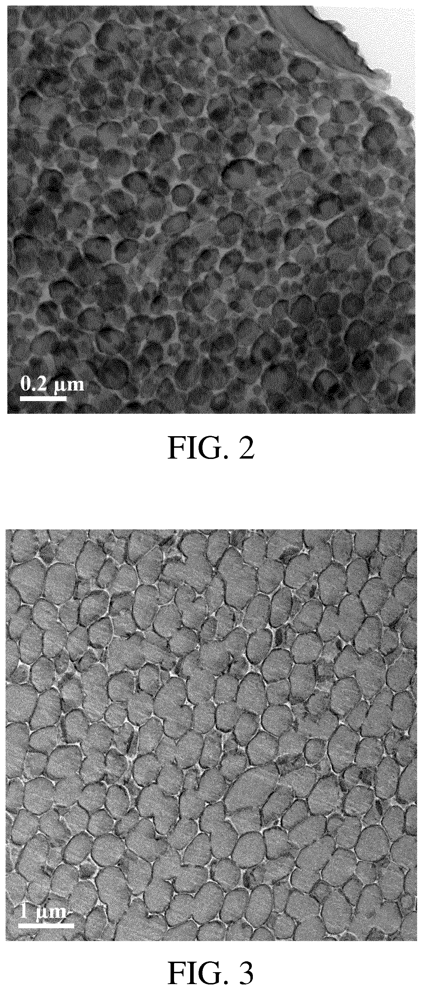

The ultrathin sections were placed on a grid, and cross-sectional photos (TEM photos) were taken with a magnification of 3000 times or 10000 times using a transmission electron microscope (JEM-2100F manufactured by JEOL Ltd.). The cross-sectional morphology of the surface region 11 and the center region 12 of the expandable resin particle 1 was observed. From the TEM photo, the morphology of the polyethylene resin (PE) phase and the polystyrene resin (PS) phase in the expandable resin particle 1 was visually observed. For example, FIG. 2 and FIG. 3 are respectively TEM photos of the surface region and the center region of the styrene-modified polyethylene-based expandable resin particle according to the following Example 1 of the present disclosure. It can be observed that the polystyrene resin is dispersed in the polyethylene resin in the form of grains, and the grains of the polystyrene resin include spherical, elliptical, spherical-like, elliptical-like, or other irregular grains.

In addition, an image processing software (MacView, MOUNTECH Co. Ltd.) was used to analyze the captured image, and record the grain size and quantity of the polystyrene resin grains to obtain a curve of grain-size (X axis) and quantity (Y axis) distribution of the grains of the polystyrene resin. The average grain size and standard deviation, as well as the skewness and kurtosis of the curve of grain-size and quantity of the distribution were calculated.

The standard deviation measures the spread of a distribution around the average grain size. It is often denoted as $s$ and is the square root of the sample variance, denoted s2, which can be calculated as follows.

$$s = \sqrt{s^2}$$

$$s^2 = \sum_{i=1}^{N} \frac{w_i(x_i - \bar{x}_w)^2}{N-1}$$

Herein, , N is the quantity of samples, $w_i$ is the weight item (=1 means that all items have the same weight), $x_i$ is the i-th value, and $\bar{x}_w$ is the weighted mean.

Skewness of the curve of grain-size and quantity of the distribution is based on the third moment about the mean (i.e. the average grain size) and is computed as follows.

$$\sum w_i^{3/2} z_i^3 \frac{N}{(N-1)(N-2)}$$

Herein, N is the quantity of samples, $w_i$ is the weight item (=1 means that all items have the same weight),

$$z_i = \frac{x_i - \bar{x}}{s}$$

, $x_i$ is the i-th value, $\bar{x}$ is the mean, and s is the standard deviation.

If the data distribution is symmetrical, the skewness is 0. If the skewness is greater than 0, the distribution is skewed to the right, that is, the distribution has a long tail on the right. If the skewness is less than 0, the distribution is skewed to the left, that is, the distribution has a long tail on the left. At the same time, the greater the absolute value of the skewness, the more serious the deviation of the distribution.

Kurtosis of the curve of grain-size and quantity of the distribution is based on the fourth moment about the mean (i.e. the average grain size) and is computed as follows.

$$\frac{N(N+1)}{(N-1)(N-2)(N-3)} \sum_{i=1}^{N} w_i^2 \left(\frac{x_i - \bar{x}}{s}\right)^4 - \frac{3(N-1)^2}{(N-2)(N-3)}$$

Herein, N is the quantity of samples, $w_i$ is the weight item (=1 means that all items have the same weight), $x_i$ is the i-th value, $\bar{x}$ is the mean, and s is the standard deviation. Using this formula, the normal distribution has a kurtosis of 0. This formula is often referred to as the excess kurtosis. If the kurtosis approaches 0, it indicates that the distribution's peak is consistent with a normal distribution; if the kurtosis is greater than 0, it indicates that the distribution's peak is sharp (high and pointed); if the kurtosis is less than 0, it indicates that the distribution's peak is flat (short and fat).

Detection method of foamed resin molded article

The compressive strength at strain of 10%, 25%, 50% and 75% and the 50% compression set were measured in accordance with ASTM D3575. The flexural strength and the flexural modulus were measured in accordance with ASTM D790IA. The tensile strength and the tensile elongation were measured according to ISO1798:2008.
The analysis results of the grains of the polystyrene resin in the surface region and the center region of the styrene-modified polyethylene-based expandable resin particles are shown in Tables 3 and 4 below.

Table 3: Analysis results of the grains of the polystyrene resin in the surface region

|  | Ex 1 | Ex 2 | Ex 3 | Ex 4 | Ex 5 | Ex 6 | Ex 7 | Ex 8 | Ex 9 | Ex 10 |
|---|---|---|---|---|---|---|---|---|---|---|
| Average grain size ($\mu$m) | 0.07 | 0.12 | 0.05 | 0.05 | 0.03 | 0.04 | 0.04 | 0.03 | 0.03 | 0.06 |
| Standard deviation ($\mu$m) | 0.02 | 0.02 | 0.02 | 0.02 | 0.02 | 0.02 | 0.02 | 0.00 | 0.01 | 0.02 |
| Quantity of grains in grain size intervals |  |  |  |  |  |  |  |  |  |  |
| ≤0.01 $\mu$m | 0 | 0 | 0 | 0 | 0 | 0 | 0 | 0 | 0 | 0 |
| 0.01-0.02 $\mu$m | 0 | 0 | 0 | 0 | 37 | 10 | 5 | 18 | 9 | 0 |
| 0.02-0.03 $\mu$m | 8 | 0 | 24 | 2 | 143 | 16 | 118 | 212 | 230 | 5 |
| 0.03-0.04 $\mu$m | 31 | 0 | 93 | 44 | 39 | 107 | 89 | 20 | 10 | 57 |
| 0.04-0.05 $\mu$m | 0 | 0 | 0 | 0 | 0 | 0 | 0 | 0 | 0 | 0 |
| 0.05-0.06 $\mu$m | 24 | 0 | 51 | 99 | 9 | 58 | 14 | 0 | 1 | 61 |
| 0.06-0.07 $\mu$m | 29 | 0 | 16 | 13 | 6 | 34 | 3 | 1 | 0 | 42 |
| 0.07-0.08 $\mu$m | 76 | 8 | 27 | 7 | 8 | 19 | 5 | 0 | 0 | 61 |
| 0.08-0.09 $\mu$m | 19 | 1 | 8 | 3 | 3 | 1 | 2 | 0 | 0 | 13 |
| 0.09-0.10 $\mu$m | 22 | 1 | 10 | 5 | 0 | 3 | 3 | 0 | 0 | 4 |
| ≥0.10 $\mu$m | 42 | 77 | 22 | 4 | 6 | 3 | 12 | 0 | 1 | 8 |
| Total quantity of grains | 251 | 87 | 251 | 177 | 251 | 251 | 251 | 251 | 251 | 251 |
| Quantity of grains in 0.01-0.1 $\mu$m grain size interval | 209 | 10 | 229 | 173 | 245 | 248 | 239 | 251 | 250 | 243 |
| Proportion of grains in 0.01-0.1 $\mu$m grain size interval | 83% | 11% | 91% | 98% | 98% | 99% | 95% | 100% | 100% | 97% |
| Quantity of grains in 0.02-0.08 $\mu$m grain size interval | 168 | 8 | 211 | 165 | 205 | 234 | 229 | 233 | 241 | 226 |
| Proportion of grains in 0.02-0.08 $\mu$m grain size interval | 67% | 9% | 84% | 93% | 82% | 93% | 91% | 93% | 96% | 90% |

(continued)

|  | Ex 11 | Ex 12 | Ex 13 | Ex 14 | Ex 15 | Ex 16 | Ex 17 | Ex 18 | Ex 19 |
|---|---|---|---|---|---|---|---|---|---|
| Average grain size (μm) | 0.10 | 0.04 | 0.11 | 0.08 | 0.04 | 0.04 | 0.05 | 0.05 | 0.04 |
| Standard deviation (μm) | 0.02 | 0.01 | 0.01 | 0.03 | 0.02 | 0.02 | 0.02 | 0.02 | 0.02 |
| Quantity of grains in grain size intervals |  |  |  |  |  |  |  |  |  |
| ≤0.01 μm | 0 | 0 | 0 | 0 | 0 | 0 | 0 | 0 | 0 |
| 0.01-0.02 μm | 0 | 0 | 0 | 0 | 0 | 23 | 9 | 16 | 10 |
| 0.02-0.03 μm | 0 | 7 | 0 | 8 | 28 | 52 | 26 | 32 | 50 |
| 0.03-0.04 μm | 0 | 150 | 0 | 16 | 148 | 54 | 20 | 24 | 118 |
| 0.04-0.05 μm | 0 | 0 | 0 | 0 | 0 | 0 | 0 | 0 | 0 |
| 0.05-0.06 μm | 3 | 56 | 0 | 31 | 43 | 34 | 25 | 32 | 38 |
| 0.06-0.07 μm | 8 | 29 | 0 | 19 | 11 | 19 | 8 | 10 | 11 |
| 0.07-0.08 μm | 29 | 8 | 4 | 33 | 8 | 28 | 8 | 12 | 10 |
| 0.08-0.09 μm | 18 | 1 | 7 | 21 | 2 | 8 | 1 | 3 | 1 |
| 0.09-0.10 μm | 16 | 0 | 4 | 17 | 1 | 3 | 3 | 6 | 4 |
| ≥0.10 μm | 51 | 0 | 57 | 48 | 10 | 3 | 4 | 6 | 9 |
| Total quantity of grains | 125 | 251 | 72 | 193 | 251 | 224 | 104 | 141 | 251 |
| Quantity of grains in 0.01-0.1 μm grain size interval | 74 | 251 | 15 | 145 | 241 | 221 | 100 | 135 | 242 |
| Proportion of grains in 0.01-0.1 μm grain size interval | 59% | 100% | 21% | 75% | 96% | 99% | 96% | 96% | 96% |
| Quantity of grains in 0.02-0.08 μm grain size interval | 40 | 250 | 4 | 107 | 238 | 187 | 87 | 110 | 227 |
| Proportion of grains in 0.02-0.08 μm grain size interval | 32% | 100% | 6% | 55% | 95% | 83% | 84% | 78% | 90% |

Table 4: Analysis results of the grains of the polystyrene resin in the center region

|  | Ex 1 | Ex 2 | Ex 3 | Ex 4 | Ex 5 | Ex 6 | Ex 7 | Ex 8 | Ex 9 | Ex 10 |
|---|---|---|---|---|---|---|---|---|---|---|
| Average grain size (μm) | 0.43 | 0.24 | 0.32 | 0.29 | 0.40 | 0.29 | 0.38 | 0.21 | 0.27 | 0.25 |
| Standard deviation (μm) | 0.08 | 0.04 | 0.06 | 0.04 | 0.08 | 0.06 | 0.09 | 0.04 | 0.04 | 0.04 |
| Quantity of grains in grain size interval |  |  |  |  |  |  |  |  |  |  |
| ≤0.1 μm | 0 | 0 | 0 | 0 | 0 | 0 | 0 | 0 | 0 | 0 |
| 0.1-0.2μm | 0 | 23 | 6 | 0 | 0 | 7 | 0 | 46 | 7 | 12 |
| 0.2-0.3μm | 16 | 118 | 27 | 74 | 13 | 39 | 17 | 90 | 94 | 133 |
| 0.3-0.4 μm | 43 | 13 | 56 | 45 | 34 | 36 | 38 | 1 | 35 | 20 |

(continued)

|  | Ex 1 | Ex 2 | Ex 3 | Ex 4 | Ex 5 | Ex 6 | Ex 7 | Ex 8 | Ex 9 | Ex 10 |
|---|---|---|---|---|---|---|---|---|---|---|
| 0.4-0.5 μm | 88 | 0 | 9 | 0 | 52 | 5 | 31 | 0 | 0 | 0 |
| 0.5-0.6 μm | 29 | 0 | 0 | 0 | 9 | 0 | 3 | 0 | 0 | 0 |
| ≥0.6 μm | 2 | 0 | 0 | 0 | 1 | 0 | 3 | 0 | 0 | 0 |
|  |  |  |  |  |  |  |  |  |  |  |
| Total quantity of grains | 178 | 154 | 98 | 119 | 109 | 87 | 92 | 137 | 136 | 165 |
| Quantity of grains in 0.1-0.6 μm grain size interval | 176 | 154 | 98 | 119 | 108 | 87 | 89 | 137 | 136 | 165 |
| Proportion of grains in 0.1-0.6 μm grain size interval | 99% | 100% | 100% | 100% | 99% | 100% | 97% | 100% | 100% | 100% |
| Quantity of grains in 0.2-0.5 μm grain size interval | 147 | 131 | 92 | 119 | 99 | 80 | 86 | 91 | 129 | 153 |
| Proportion of grains in 0.2-0.5 μm grain size interval | 83% | 85% | 94% | 100% | 91% | 92% | 93% | 66% | 95% | 93% |
|  | Ex 11 | Ex 12 | Ex 13 | Ex 14 | Ex 15 | Ex 16 | Ex 17 | Ex 18 | Ex 19 |  |
| Average grain size (μm) | 0.24 | 0.32 | 0.28 | 0.25 | 0.34 | 0.31 | 0.29 | 0.31 | 0.31 |  |
| Standard deviation (μm) | 0.04 | 0.06 | 0.06 | 0.06 | 0.07 | 0.07 | 0.07 | 0.07 | 0.07 |  |
| Quantity of grains in grain size intervals |  |  |  |  |  |  |  |  |  |  |
| ≤0.1μm | 0 | 0 | 0 | 0 | 0 | 0 | 0 | 0 | 0 |  |
| 0.1-0.2μm | 34 | 0 | 11 | 19 | 0 | 8 | 11 | 15 | 10 |  |
| 0.2-0.3μm | 129 | 57 | 68 | 87 | 44 | 28 | 33 | 56 | 34 |  |
| 0.3-0.4 μm | 12 | 108 | 41 | 18 | 104 | 52 | 39 | 87 | 62 |  |
| 0.4-0.5 μm | 0 | 11 | 2 | 1 | 27 | 7 | 4 | 10 | 11 |  |
| 0.5-0.6 μm | 0 | 2 | 0 | 0 | 3 | 0 | 0 | 3 | 0 |  |
| ≥0.6 μm | 0 | 0 | 0 | 0 | 0 | 0 | 0 | 0 | 0 |  |
|  |  |  |  |  |  |  |  |  |  |  |
| Total quantity of grains | 175 | 178 | 122 | 125 | 178 | 95 | 87 | 171 | 117 |  |
| Quantity of grains in 0.1-0.6 μm grain size interval | 175 | 178 | 122 | 125 | 178 | 95 | 87 | 171 | 117 |  |

(continued)

| | Ex 11 | Ex 12 | Ex 13 | Ex 14 | Ex 15 | Ex 16 | Ex 17 | Ex 18 | Ex 19 | |
|---|---|---|---|---|---|---|---|---|---|---|
| Proportion of grains in 0.1-0.6 μm grain size in- terval | 100% | 100% | 100% | 100% | 100% | 100% | 100% | 100% | 100% | |
| Quantity of grains in 0.2-0.5 μm grain size in- terval | 141 | 176 | 111 | 106 | 175 | 87 | 76 | 153 | 107 | |
| Proportion of grains in 0.2-0.5 μm grain size in- terval | 81% | 99% | 91% | 85% | 98% | 92% | 87% | 89% | 91% | |

The average grain size and the standard deviation of the grains of the polystyrene resin, as well as the skewness and the kurtosis of the curve of the grain-size and quantity distribution of the grains in the surface region and the center region of the expandable resin particle are shown in Table 5 below.

Table 5: The statistical results of the average grain size and the standard deviation of the grains of the polystyrene resin, as well as the skewness and the kurtosis of the curve of the grain-size and quantity distribution of the grains of the polystyrene resin

| | Center region | | | | Surface region | | | |
|---|---|---|---|---|---|---|---|---|
| | Average grain size (μm) | Standard deviation (μm) | Skewness | Kurtosis | Average grain size (μm) | Standard deviation (μm) | Skewness | Kurtosis |
| Ex 1 | 0.43 | 0.08 | -0.07 | 0.78 | 0.07 | 0.02 | -0.07 | -0.66 |
| Ex 2 | 0.24 | 0.04 | 0.05 | -0.49 | 0.12 | 0.02 | 0.00 | 0.54 |
| Ex 3 | 0.32 | 0.06 | -0.40 | 0.04 | 0.05 | 0.02 | 1.02 | 0.10 |
| Ex 4 | 0.29 | 0.04 | 0.30 | -0.16 | 0.05 | 0.02 | 1.82 | 4.13 |
| Ex 5 | 0.40 | 0.08 | -0.13 | -0.21 | 0.03 | 0.02 | 2.67 | 7.54 |
| Ex 6 | 0.29 | 0.06 | -0.03 | -0.33 | 0.04 | 0.02 | 1.23 | 2.91 |
| Ex 7 | 0.38 | 0.09 | 0.66 | 1.46 | 0.04 | 0.02 | 2.75 | 7.49 |
| Ex 8 | 0.21 | 0.04 | -0.40 | 0.24 | 0.03 | 0.00 | 0.62 | 9.72 |
| Ex 9 | 0.27 | 0.04 | 0.07 | -0.31 | 0.03 | 0.01 | 8.00 | 118.76 |
| Ex 10 | 0.25 | 0.04 | 0.44 | 0.61 | 0.06 | 0.02 | 0.28 | -0.61 |
| Ex 11 | 0.24 | 0.04 | 0.16 | -0.36 | 0.10 | 0.02 | 0.70 | 0.26 |
| Ex 12 | 0.32 | 0.06 | 0.30 | 0.90 | 0.04 | 0.01 | 1.30 | 0.98 |
| Ex 13 | 0.28 | 0.06 | 0.06 | 0.48 | 0.11 | 0.01 | -0.32 | -0.74 |
| Ex 14 | 0.25 | 0.06 | 0.31 | 2.01 | 0.08 | 0.03 | -0.18 | -1.09 |
| Ex 15 | 0.34 | 0.07 | 0.11 | 0.14 | 0.04 | 0.02 | 2.30 | 5.51 |
| Ex 16 | 0.31 | 0.07 | -0.23 | -0.52 | 0.04 | 0.02 | 0.98 | 0.92 |
| Ex 17 | 0.29 | 0.07 | -0.52 | 0.25 | 0.05 | 0.02 | 1.29 | 1.96 |
| Ex 18 | 0.31 | 0.07 | 0.35 | 0.91 | 0.05 | 0.02 | 0.84 | -0.22 |
| Ex 19 | 0.31 | 0.07 | -0.28 | -0.19 | 0.04 | 0.02 | 2.06 | 4.78 |

The detection results of the styrene-modified polyethylene-based expandable resin particles and the foamed resin molded article prepared therefrom are shown in the following Table 6 and Table 7 respectively.

Table 6: Detection results of styrene-modified polyethylene-based expandable resin particles

| E x | PS Content (NMR) (wt%) | Absorbance ratio (D698/D2850) | Xylene insoluble matter (wt%) | Acetone insoluble matter (wt%) | Xylene insoluble matter/ acetone insoluble matter | Acetone insoluble matter + xylene insoluble matter (wt%) | Acetone soluble matter (wt%) | Swelling ratio | Mw of the uncrosslinked part of PS (g/mol) | PDI |
|---|---|---|---|---|---|---|---|---|---|---|
| 1 | 85.0% | 5.65 | 36.0% | 31.5% | 1.14 | 67.5% | 32.5% | 1.39 | 59489 | 2.80 |
| 2 | 82.1% | 4.43 | 54.6% | 23.2% | 2.35 | 77.8% | 22.2% | 1.19 | 49041 | 2.72 |
| 3 | 84.9% | 1.72 | 61.3% | 22.3% | 2.75 | 83.6% | 16.4% | 1.47 | 68578 | 3.05 |
| 4 | 85.9% | 1.90 | 22.6% | 46.7% | 0.48 | 69.3% | 30.7% | 2.16 | 62415 | 2.17 |
| 5 | 86.1% | 1.73 | 2.8% | 38.9% | 0.07 | 41.7% | 58.3% | 1.60 | 60906 | 2.24 |
| 6 | 85.9% | 2.04 | 24.3% | 41.8% | 0.58 | 66.1% | 33.9% | 1.63 | 57300 | 2.30 |
| 7 | 85.3% | 1.76 | 12.6% | 41.5% | 0.30 | 54.1% | 45.9% | 1.27 | 55861 | 2.25 |
| 8 | 76.0% | 0.60 | 20.9% | 53.5% | 0.39 | 74.4% | 25.6% | 1.28 | 74138 | 2.38 |
| 9 | 80.5% | 0.81 | 19.8% | 36.3% | 0.54 | 56.1% | 43.9% | 1.16 | 31722 | 2.57 |
| 10 | 84.7% | 3.37 | 41.8% | 40.1% | 1.04 | 81.9% | 18.1% | 1.73 | 62692 | 2.76 |
| 11 | 87.2% | 5.91 | 38.8% | 39.7% | 0.98 | 78.5% | 21.5% | 1.48 | 56881 | 3.05 |
| 12 | 87.8% | 1.83 | 33.4% | 47.5% | 0.70 | 80.8% | 19.2% | 1.53 | 45256 | 2.61 |
| 13 | 85.0% | 2.70 | 42.3% | 35.9% | 1.18 | 78.2% | 21.8% | 1.52 | 48073 | 2.50 |
| 14 | 88.6% | 5.96 | 56.8% | 18.6% | 3.06 | 75.4% | 24.6% | 1.56 | 62122 | 3.00 |
| 15 | 84.9% | 1.81 | 14.7% | 49.6% | 0.30 | 64.3% | 35.7% | 2.17 | 60643 | 2.26 |
| 16 | 85.8% | 2.16 | 21.4% | 51.8% | 0.41 | 73.3% | 26.7% | 2.10 | 35643 | 2.20 |
| 17 | 86.3% | 1.90 | 20.6% | 56.2% | 0.37 | 76.8% | 23.2% | 1.13 | 44190 | 1.96 |
| 18 | 87.4% | 1.43 | 15.9% | 51.8% | 0.31 | 67.7% | 32.3% | 1.52 | 44106 | 1.98 |
| 19 | 87.1% | 1.45 | 20.7% | 53.1% | 0.39 | 73.8% | 26.2% | 2.13 | 39538 | 1.96 |

Table 7: Detection results of foamed resin molded article

| Ex | Compressive strength @ Strain=10% (MPa) | Compressive strength @ Strain =25% (MPa) | Compressive strength @ Strain =50% (MPa) | Compressive strength @ Strain =75% (MPa) | 50% Compression set (%) | Flexural strength (kg/cm²) | Flexural modulus (kg/cm²) | Tensile strength (MPa) | Tensile elongation (%) |
|---|---|---|---|---|---|---|---|---|---|
| 1 | 0.186 | 0.309 | 0.515 | 1.601 | 40.4 | 9.2 | 530.3 | 0.414 | 1.2 |
| 2 | 0.143 | 0.184 | 0.266 | 0.519 | 47.8 | 2.0 | 122.4 | 0.235 | 2.1 |
| 3 | 0.313 | 0.386 | 0.540 | 1.014 | 44.1 | 4.8 | 221.7 | 0.448 | 2.1 |
| 4 | 0.150 | 0.174 | 0.211 | 0.343 | 42.1 | 2.0 | 98.7 | 0.179 | 2.5 |
| 5 | 0.173 | 0.204 | 0.264 | 0.459 | 43.2 | 2.1 | 104.3 | 0.224 | 2.6 |
| 6 | 0.213 | 0.263 | 0.361 | 0.650 | 44.1 | 2.5 | 102.7 | 0.323 | 2.4 |
| 7 | 0.239 | 0.241 | 0.243 | 0.468 | 40.3 | 4.5 | 324.1 | 0.173 | 1.7 |
| 8 | 0.189 | 0.237 | 0.278 | 0.481 | 36.1 | 3.6 | 196.8 | 0.263 | 3.5 |
| 9 | 0.149 | 0.165 | 0.200 | 0.332 | 36.6 | 3.9 | 258.3 | 0.270 | 2.2 |
| 10 | 0.140 | 0.158 | 0.178 | 0.314 | 42.1 | 3.1 | 198.6 | 0.111 | 1.5 |
| 11 | 0.157 | 0.169 | 0.192 | 0.342 | 42.1 | 1.5 | 115.2 | 0.149 | 1.5 |
| 12 | 0.169 | 0.191 | 0.236 | 0.425 | 44.7 | 3.0 | 178.3 | 0.168 | 1.7 |
| 13 | 0.176 | 0.216 | 0.300 | 0.563 | 49.5 | 2.1 | 112.2 | 0.137 | 1.5 |
| 14 | 0.259 | 0.310 | 0.415 | 0.758 | 45.5 | 3.3 | 166.6 | 0.289 | 1.5 |
| 15 | 0.140 | 0.166 | 0.218 | 0.385 | 42.9 | 2.9 | 146.4 | 0.215 | 2.1 |
| 16 | 0.217 | 0.264 | 0.358 | 0.637 | 44.5 | 3.8 | 213.0 | 0.222 | 1.9 |
| 17 | 0.225 | 0.227 | 0.271 | 0.485 | 44.1 | 2.6 | 136.5 | 0.230 | 1.8 |
| 18 | 0.208 | 0.254 | 0.348 | 0.634 | 44.5 | 3.9 | 218.6 | 0.275 | 3.0 |
| 19 | 0.220 | 0.266 | 0.360 | 0.651 | 43.8 | 3.6 | 203.7 | 0.246 | 2.4 |

The above results indicate that when the average grain size of the grains of the polystyrene resin in the surface region and the center region of the styrene-modified polyethylene-based expandable resin particle is within a specific range, the foamed resin molded article prepared therefrom has proper rigidity and compression restorability. When the skewness or the kurtosis of the curve of grain-size and quantity distribution of the grains of the polystyrene resin in the surface region and the center region of the styrene-modified polyethylene-based expandable resin particle is within a specific range, the foamed resin molded article prepared therefrom has proper rigidity and compression restorability. When the content of the xylene insoluble matter, the content of the acetone insoluble matter, the ratio thereof or the sum thereof in the styrene-modified polyethylene-based expandable resin particles is within a specific range, the foamed resin molded article prepared therefrom has proper rigidity and compression restorability. In addition, when the swelling ratio of the styrene-modified polyethylene-based expandable resin particles, the molecular weight of the uncrosslinked part of the polystyrene resin, or the absorbance ratio ($D_{698}/D_{2850}$) of the infrared absorption spectrum is within a specific range, the foamed resin molded article prepared therefrom also has appropriate rigidity and compression restorability. Therefore, the styrene-modified polyethylene-based expandable resin particles, expanded resin particles, and foamed resin molded articles provided by the present disclosure can improve the shortcomings of poor restorability after compression of the polystyrene foamed resin molded articles and also improve the disadvantages of insufficient rigidity of the polyethylene foamed resin molded articles, and can be applied to various cushioning materials, such as materials for transport containers or transportation devices.

Although the present disclosure has been explained in relation to its embodiment, it is to be understood that many other possible modifications and variations can be made without departing from the spirit and scope of the disclosure as hereinafter claimed.

**Claims**

1. A styrene-modified polyethylene-based expandable resin particle, comprising: a polyethylene resin and a polystyrene resin,

   wherein a content of the polyethylene resin ranges from 5 wt% to 30 wt% and a content of the polystyrene resin ranges from 70 wt% to 95 wt% based on 100 wt% of the polyethylene resin and the polystyrene resin,
   wherein the polystyrene resin is in a form of grains dispersed in the polyethylene resin,
   wherein an average grain size of the grains of the polystyrene resin ranges from 0.02 um to 0.15 um in a surface region of the expandable resin particle, and the surface region of the expandable resin particle is a region from 1.5 um from a surface of the expandable resin particle to the surface of the expandable resin particle,
   wherein an average grain size of the grains of the polystyrene resin ranges from 0.20 um to 0.60 um in a center region of the expandable resin particle, and the center region of the expandable resin particle is a region at least 500 um away from the surface of the expandable resin particle.

2. The expandable resin particle of claim 1, wherein a quantity of the grains of the polystyrene resin with a grain size between 0.01 um to 0.1 um is 50% or more of a total quantity of the grains of the polystyrene resin in the surface region of the expandable resin particle, or wherein a quantity of the grains of the polystyrene resin with a grain size between 0.02 um to 0.08 um is 50% or more of a total quantity of the grains of the polystyrene resin in the surface region of the expandable resin particle.

3. The expandable resin particle of claim 1 or 2, wherein a quantity of the grains of the polystyrene resin with a grain size between 0.1 um to 0.6 um is 70% or more of a total quantity of the grains of the polystyrene resin in the center region of the expandable resin particle, or wherein a quantity of the grains of the polystyrene resin with a grain size between 0.2 um to 0.5 um is 60% or more of a total quantity of the grains of the polystyrene resin in the center region of the expandable resin particle.

4. The expandable resin particle of any of the claims 1 to 3, wherein a skewness of a curve of grain-size and quantity distribution of the grains of the polystyrene resin is between -0.5 to 8 in the surface region of the expandable resin particle, and/or wherein a skewness of a curve of grain-size and quantity distribution of the grains of the polystyrene resin is between -0.7 to 0.7 in the center region of the expandable resin particle.

5. The expandable resin particle of any of the claims 1 to 4, wherein a kurtosis of a curve of grain-size and quantity distribution of the grains of the polystyrene resin is between -1.5 to 120 in the surface region of the expandable resin particle, and/or wherein a kurtosis of a curve of grain-size and quantity distribution of the grains of the polystyrene resin is between -1.0 to 2.5 in the center region of the expandable resin particle.

6. The expandable resin particle of any of the claims 1 to 5, wherein the expandable resin particle comprises a xylene insoluble matter and an acetone insoluble matter, and a ratio of a content of the xylene insoluble matter to a content of the acetone insoluble matter ranges from 0.01 to 5.

7. The expandable resin particle of claim 6, wherein the content of the acetone insoluble matter ranges from 10 wt% to 60 wt %, and/ or wherein the content of the xylene insoluble matter is less than or equal to 70 wt%.

8. The expandable resin particle of claim 6 or 7, wherein a sum of the content of the acetone insoluble matter and the content of the xylene insoluble matter ranges from 40 wt% to 90 wt%.

9. The expandable resin particle of any of the claims 1 to 8, wherein a swelling ratio of the expandable resin particle is less than or equal to 2.5; and/or wherein the polystyrene resin has an uncrosslinked part, and a molecular weight of the uncrosslinked part ranges from 30,000 to 80,000.

10. The expandable resin particle of any of the claims 1 to 9, wherein an absorbance ratio at 698 cm$^{-1}$ and 2850 cm$^{-1}$ obtained from an infrared absorption spectrum of a surface of the expandable resin particle is greater than or equal to 1.0.

11. A styrene-modified polyethylene-based expanded resin particle, which is manufactured by the expandable resin particle of any of the claims 1 to 10 through a foaming process.

12. A foamed resin molded article, which is manufactured by the expanded resin particle of claim 11 through a molding process.

13. The foamed resin molded article of claim 12, which is used as a material for a transport container or a transportation device.

14. A method for manufacturing the expandable resin particle of any of the claims 1 to 10, comprising the following steps:

   providing a mixture comprising a polyethylene resin particle; and
   mixing the mixture comprising the polyethylene resin particle with a styrene monomer and a polymerization initiator to obtain the expandable resin particle of any of the claims 1 to 10.

15. The method of claim 14, wherein the mixture comprising the polyethylene resin particle is mixed with the styrene monomer and the polymerization initiator, followed by heating to 115°C to 125°C to obtain the expandable resin particle of any of the claims 1 to 10.

FIG. 1

FIG. 2

FIG. 3

Europäisches
Patentamt

European
Patent Office

Office européen
des brevets

# EUROPEAN SEARCH REPORT

Application Number

EP 24 16 4826

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/243365 A1 (MATSUMURA HIDEYASU [JP] ET AL) 18 October 2007 (2007-10-18) * figures 2-4; example 2 * | 1-15 | INV. C08J9/00 C08F212/08 C08F255/02 C08J9/18 C08J9/232 |
| X | US 2006/058406 A1 (MATSUMURA HIDEYASU [JP] ET AL) 16 March 2006 (2006-03-16) * examples 1-13 * | 1-15 | |
| E | EP 4 345 116 A1 (LCY CHEMICAL CORP [TW]) 3 April 2024 (2024-04-03) * examples 1-2; tables 1-4 * | 1-15 | ADD. C08J9/12 |

TECHNICAL FIELDS
SEARCHED        (IPC)

C08J
C09J
C08F

The present search report has been drawn up for all claims

| Place of search | Date of completion of the search | Examiner |
|---|---|---|
| The Hague | 4 September 2024 | Mayer, Anne |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 16 4826

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2024

| Patent document cited in search report | Publication date | Patent family member(s) | | Publication date |
|---|---|---|---|---|
| US 2007243365 A1 | 18-10-2007 | CN | 101001897 A | 18-07-2007 |
| | | EP | 1803752 A1 | 04-07-2007 |
| | | JP | 4717001 B2 | 06-07-2011 |
| | | JP | WO2006027944 A1 | 08-05-2008 |
| | | KR | 20070032631 A | 22-03-2007 |
| | | TW | I310777 B | 11-06-2009 |
| | | US | 2007243365 A1 | 18-10-2007 |
| | | US | 2012004337 A1 | 05-01-2012 |
| | | WO | 2006027944 A1 | 16-03-2006 |
| US 2006058406 A1 | 16-03-2006 | EP | 1607437 A1 | 21-12-2005 |
| | | JP | 4072554 B2 | 09-04-2008 |
| | | JP | 4845862 B2 | 28-12-2011 |
| | | JP | 2008081746 A | 10-04-2008 |
| | | JP | WO2004085528 A1 | 29-06-2006 |
| | | KR | 20050111771 A | 28-11-2005 |
| | | MY | 136268 A | 30-09-2008 |
| | | TW | I242023 B | 21-10-2005 |
| | | US | 2006058406 A1 | 16-03-2006 |
| | | WO | 2004085528 A1 | 07-10-2004 |
| EP 4345116 A1 | 03-04-2024 | CN | 117777610 A | 29-03-2024 |
| | | EP | 4345116 A1 | 03-04-2024 |
| | | JP | 2024050496 A | 10-04-2024 |
| | | KR | 20240045146 A | 05-04-2024 |
| | | TW | 202413507 A | 01-04-2024 |
| | | US | 2024110030 A1 | 04-04-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TW 113104963